# EUROPEAN PATENT APPLICATION

(11) **EP 4 778 793 A1**
(43) Date of publication of application: **22.07.2026**
(21) Application number: 24888377.9
(22) Date of filing: 05.09.2024
(51) Int. Cl.: B60T 8/34, H05K 5/06

(54) **HOUSING ASSEMBLY AND METHOD FOR MANUFACTURING HOUSING ASSEMBLY**

(30) Priority: 06.11.2023 JP 2023189685
(71) Applicant: Astemo, Ltd., Chiyoda-ku, Tokyo 1000004 (JP)
(72) Inventor: CHIBA, Kentaro, Hitachinaka-shi, Ibaraki 312-8503 (JP); MURATA, Daisuke, Hitachinaka-shi, Ibaraki 312-8503 (JP); NOHARA, Misato, Hitachinaka-shi, Ibaraki 312-8503 (JP)
(74) Representative: Kiwit, Benedikt
(86) International application number: PCT/JP2024/031913
(87) International publication number: WO 2025/100075

(57) **Abstract**

A housing assembly and a method for manufacturing the housing assembly that can ensure adhesion and sealing performance of a housing and prevent a screw from falling off are provided. In a housing assembly (U), a housing (200) is fixed to one surface (101) of a base body (100) with a screw (50). The housing (200) includes a housing body (202) forming an accommodation portion (200a). The housing (200) is fixed with an adhesive (G) having a sealing function interposed at an abutting portion between the housing body (202) and the base body (100). A screw hole (116) into which the screw (50) is screwed is formed in the one surface (101) of the base body (100). The adhesive (G) is interposed between the screw (50) and the screw hole (116).

## Description

### Technical Field

The present invention relates to a housing assembly and a method for manufacturing the housing assembly.

### Background Art

In a brake system of a vehicle such as a two-wheeled vehicle or a four-wheeled vehicle, there is known a brake system including a vehicular brake hydraulic control apparatus that controls a brake hydraulic pressure applied to a wheel brake. Such a vehicular brake hydraulic control apparatus includes a housing assembly (see, for example, PTL 1). The housing assembly includes a metal base body in which a brake fluid passage is formed, and a resin housing fixed to one surface of the base body by a screw.

The housing is provided with an insertion hole through which a screw is to be inserted. A metal bush is disposed in the insertion hole in order to increase tightening torque of the screw.

On the other hand, an adhesive may be interposed between the base body and the housing. In this housing assembly, a space between the base body and the housing can be hermetically sealed with the adhesive. Also in this housing assembly, it is assumed that the metal bush is disposed in the insertion hole through which a screw is to be inserted.

### Citation List

### Patent Literature

PTL 1: JP2011-230656A

### Summary of Invention

### Technical Problem

In the housing assembly of PTL 1, a step of insert-molding the bush in the housing is required in a manufacturing process. If the housing assembly is manufactured by eliminating the bush, the screw may be loosened due to creep or the like. Therefore, there is a problem in eliminating the bush.

The invention solves the above-mentioned problem and provides a housing assembly and a method for manufacturing a housing assembly that can ensure adhesion and sealing performance of a housing and prevent screw from falling off.

### Solution to Problem

In order to solve the above problem, in a housing assembly according to the invention, a housing is fixed to one surface of a base body with a screw. The housing includes a housing body forming an accommodation portion. The housing is fixed with an adhesive having a sealing function interposed at an abutting portion between the housing body and the base body. A screw hole into which the screw is screwed is formed in the one surface of the base body. The adhesive is interposed between the screw and the screw hole.

In order to solve the above problem, a method for manufacturing a housing assembly according to the invention includes fixing a housing provided with a housing body abutting on one surface of a base body to the one surface with a screw. The one surface is provided with a screw hole into which the screw is screwed. The method for manufacturing the housing assembly includes: an application step of applying an adhesive having a sealing function to an abutting portion of the one surface with the housing body and the screw hole; and a fixing step of making the housing body abut against the adhesive applied to the abutting portion and screwing the screw into the screw hole to fix the housing.

### Advantageous Effects of Invention

According to the housing assembly and the method for manufacturing the housing assembly of the invention, it is possible to ensure the adhesion and sealing performance of the housing and to prevent the screw from falling off.

### Brief Description of Drawings

[FIG. 1] FIG. 1 is a side cross-sectional view showing a housing assembly according to a first embodiment of the invention.
[FIG. 2] FIG. 2 is an exploded perspective view of the housing assembly, similarly.
[FIG. 3] FIG. 3 is a front view showing one surface of a base body to which a housing is fixed.
[FIG. 4] FIG. 4 is a rear view showing a fixing surface of the housing.
[FIG. 5] FIG. 5 is a cross-sectional view showing a main part of the housing assembly along a screw hole.
[FIG. 6] (a) to (c) of FIG. 6 are cross-sectional views likewise showing how the housing is fixed to the base body.
[FIG. 7] FIG. 7 is a front view showing one surface of a base body provided in a housing assembly according to a second embodiment of the invention.
[FIG. 8] FIG. 8 is a rear view showing a fixing surface of the housing, similarly.

### Description of Embodiments

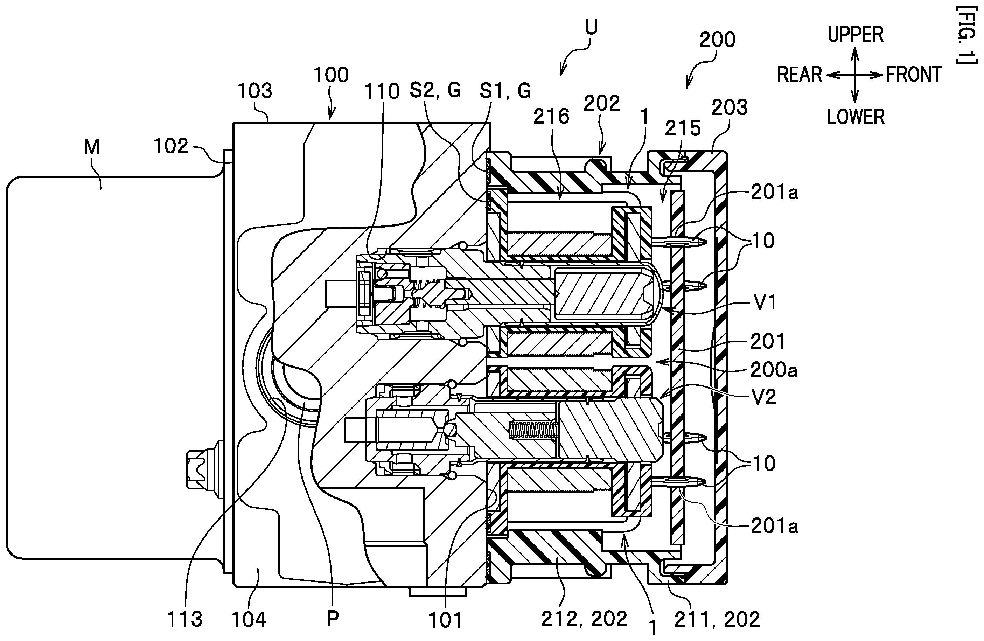

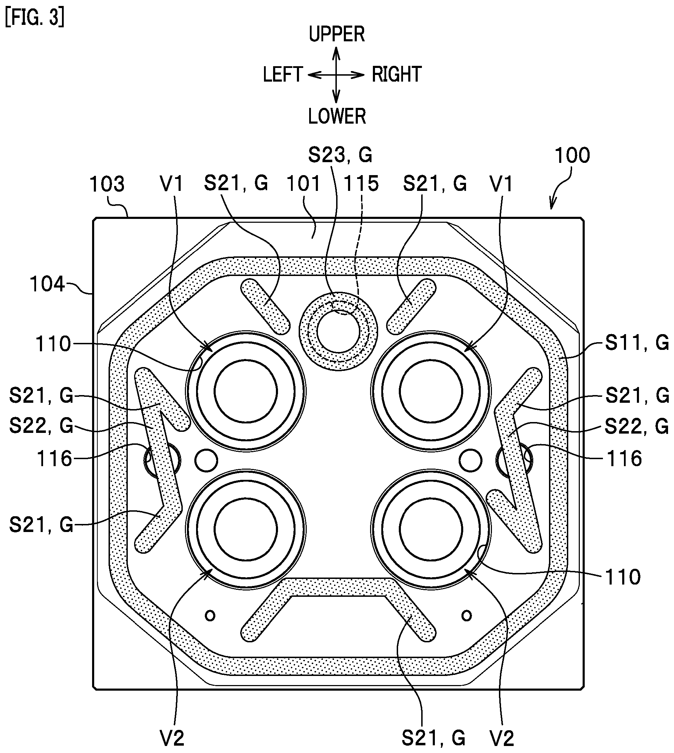

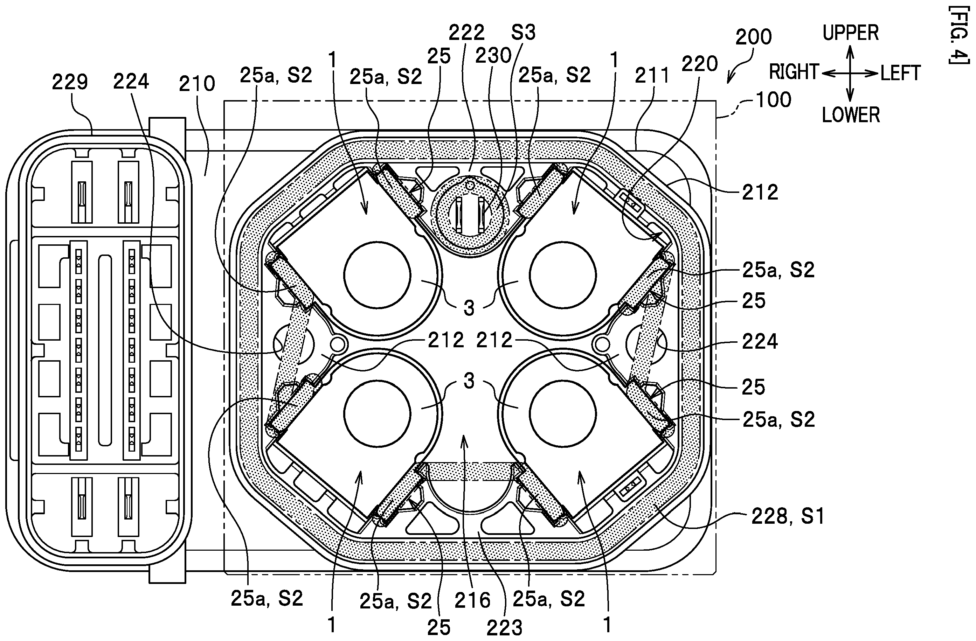

Hereinafter, embodiments of the invention will be described in detail with reference to the drawings as appropriate. In the following description, terms "front-rear" and "upper-lower" of a housing assembly are based on directions shown in FIG. 1, and a term "left-right" is based on directions shown in FIGS. 3 and 4. However, these terms are not intended to limit directions in which a coil assembly is assembled to a vehicle or the like.

### (First Embodiment)

In the present embodiment, a case where a housing assembly is applied to a bar handle vehicle such as a two-wheeled vehicle or a three-wheeled vehicle as a vehicle including two brake systems will be described as an example. Of course, the invention may be applied to a vehicle brake hydraulic pressure control apparatus for a four-wheeled vehicle.

### (Configuration of Housing Assembly)

A housing assembly U is connected between a master cylinder and a wheel brake (not shown), and controls a brake hydraulic pressure acting on the wheel brake.

As shown in FIG. 1, the housing assembly U includes a base body 100 to which solenoid valves V1, V2, a motor M, a reciprocating pump P, and the like corresponding to two brake systems are assembled. The housing assembly U includes a housing 200 provided with a control board 201 (see FIG. 1) that detects movement of a vehicle body and controls opening and closing of the solenoid valves V1, V2, an operation of the motor M, and the like. In addition to the solenoid valves V1, V2, various sensors such as a pressure sensor can be assembled to the base body 100.

A brake fluid passage (oil passage) (not shown) is formed in the base body 100. The housing assembly U is configured such that the control board 201 operates the solenoid valves V1, V2 and the motor M based on the movement of the vehicle body to vary the brake hydraulic pressure in the brake fluid passage.

### (Configuration of Base Body)

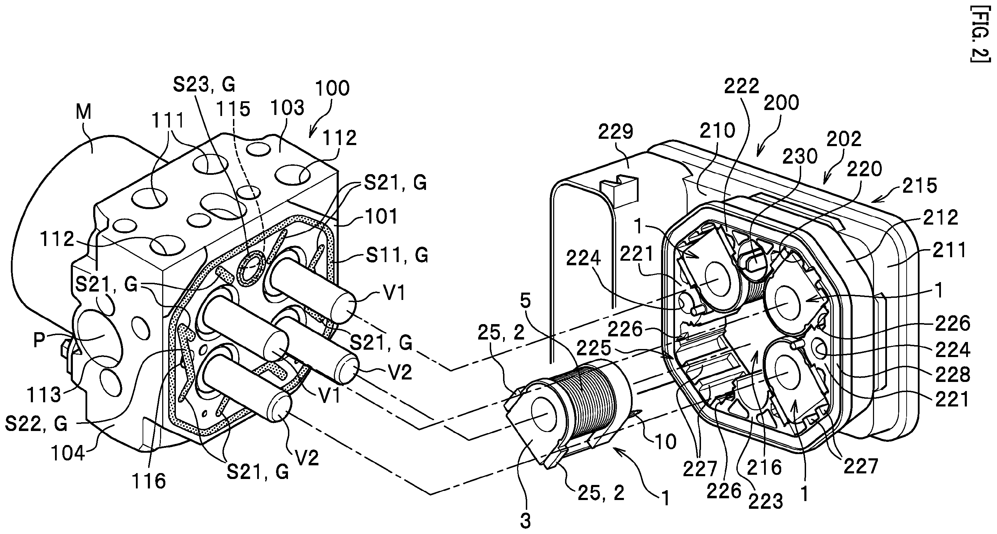

The base body 100 is a metal component (see FIG. 2) formed in a substantially rectangular parallelepiped shape, and the brake fluid passage (oil passage) (not shown) is formed therein.

A plurality of bottomed attachment holes 110 and the like to which the solenoid valves V1, V2 are mounted are formed in a front surface 101 as one surface among respective surfaces of the base body 100. Note, the number of the solenoid valves V1, V2 to be used varies depending on, for example, a case where a target vehicle is a four-wheeled vehicle or a difference in functions of the housing assembly U. A coil assembly 1 as an electrical component is externally fitted to each of the solenoid valves V1, V2 of the present embodiment. The solenoid valve V1 is, for example, a normally open solenoid valve. The solenoid valve V2 is, for example, a normally closed solenoid valve. As shown in FIG. 1, each coil assembly 1 is electrically connected to the control board 201 in the housing 200 using press-fit terminals 10 as connection terminals.

As shown in FIG. 2, an insertion hole 115 through which a motor bus bar (not shown) of the motor M is inserted is formed on the front surface 101. The motor bus bar is inserted into the insertion hole 115 of the base body 100 and is electrically connected to the control board 201 (see FIG. 1, the same applies hereinafter) through a bus bar terminal portion 230 (see FIGS. 2 and 4) of the housing 200. A press-fit terminal (not shown) is connected to the bus bar terminal portion 230 in a protruding forward manner. The motor bus bar connected to the bus bar terminal portion 230 is electrically connected to the control board 201 via the press-fit terminal. A peripheral edge portion of the bus bar terminal portion 230 can abut against the front surface 101 of the base body 100, and functions as an electrical component adhesion margin S3 (see FIG. 4) for fixing the housing 200 with an adhesive G.

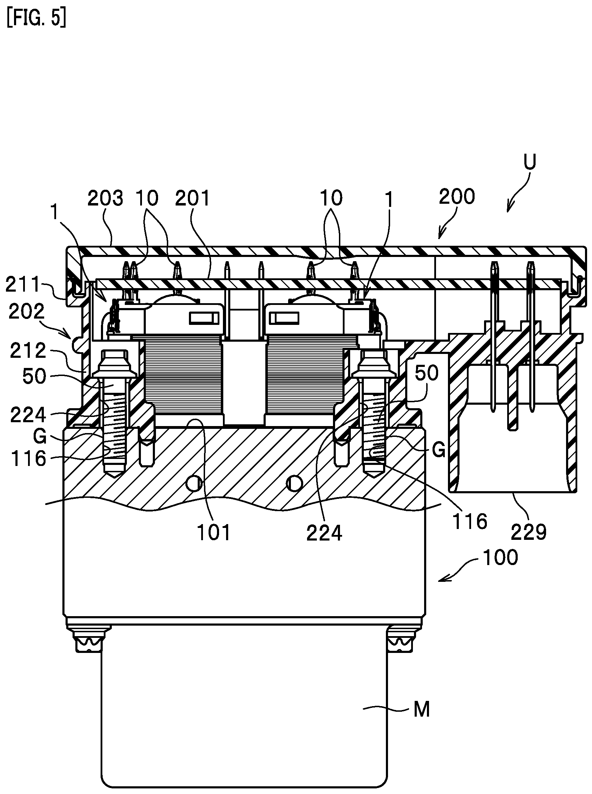

Further, as shown in FIGS. 2 and 3, screw holes 116 for fixing the housing 200 to the base body 100 are formed on the front surface 101. As shown in FIG. 5, fixing screws 50 are screwed into the screw holes 116. In the present embodiment, the screws 50 are screwed into the screw holes 116 via the adhesive G as described later.

As shown in FIG. 3, the adhesive G is applied to the front surface 101 of the base body 100. The adhesive G is applied to a region indicated by an annular hatching line S11 at a peripheral edge portion of the front surface 101 and regions indicated by linear hatching lines S21 on respective both side portions of the solenoid valves V1, V2. Further, the adhesive G is applied to regions indicated by linear hatching lines S22 intersecting the screw holes 116 and a region indicated by a circular hatching line S23 at a peripheral edge portion of the insertion hole 115.

At a left edge portion of the front surface 101, the hatching lines S21, S21 on a left side of the solenoid valves V1, V2 are connected to the hatching line S22. Similarly, at a right edge portion of the front surface 101, the hatching lines S21, S21 on a right side of the solenoid valves V1, V2 are connected to the hatching line S22. Each hatching line S22 extends to cross a center portion of the screw hole 116 in a diameter direction. That is, each hatching line S22 is applied so as to cover a part of the screw hole 116.

Note, the hatching line S11 is located at a position corresponding to a peripheral groove 228 (see FIG. 4) of the housing 200 to be described later. In addition, the hatching line S21 is located at a position corresponding to a rib 25 of the coil assembly 1 to be described later. Further, the hatching line S23 is located at a position corresponding to the peripheral edge portion of the bus bar terminal portion 230.

The adhesive G has a sealing function, and has a property of being cured after application to become an elastic body. That is, the adhesive G is cured in a state of having elasticity (cushioning property). As the adhesive G, for example, a silicone-based adhesive can be used.

As shown in FIG. 2, inlet ports 111, outlet ports 112, and the like to which pipes leading to the wheel brake (not shown) are to be connected are formed in an upper surface 103 of the base body 100.

Further, a reservoir hole or the like to which a reservoir component (not shown) constituting a reservoir is to be assembled is formed in a lower surface of the base body 100.

Moreover, a pump hole 113 on which the reciprocating pump P is to be mounted is formed in a side surface 104 of the base body 100.

Note, brake fluid control-related holes provided in the base body 100 communicate with each other directly or via the brake fluid passage (not shown) formed inside the base body 100.

The motor M is an electric component serving as a power source of the reciprocating pump P. The motor M is integrally fixed to a rear surface 102 (see FIG. 1) on the other surface side of the base body 100. The motor M drives the reciprocating pump P.

### (Configuration of Housing)

As shown in FIG. 1, the housing 200 is a box-shaped body integrally fixed to the front surface 101 of the base body 100 in a state of covering the solenoid valves V1, V2 protruding from the front surface 101 of the base body 100. The housing 200 is adhered to the front surface 101 with the adhesive G, and is fixed to the base body 100 with two screws 50 (see FIG. 5).

The housing 200 includes a housing body 202 and a lid body 203. The housing body 202 and the lid body 203 are formed of a resin material. A space surrounded by the housing body 202 and the lid body 203 is an accommodation portion 200a. The accommodation portion 200a accommodates the coil assembly 1 and the control board 201 as the electric components. The coil assembly 1 is fixed to an inner surface of the housing body 202 by being press-fitted as described later. In the housing body 202, a front surface opposite to the base body 100 side and a rear surface on the base body 100 side are respectively opened.

As shown in FIG. 2, the housing body 202 includes a plate-shaped bottom portion 210, a first peripheral wall portion 211 provided on a front surface side of the bottom portion 210, and a second peripheral wall portion 212 provided on a rear surface side of the bottom portion 210. A connector portion 229 is provided on a side portion of the housing body 202.

As shown in FIGS. 2 and 4, the bottom portion 210 has a substantially rectangular outer shape. As shown in FIG. 2, the first peripheral wall portion 211 extends forward from a peripheral edge portion of the bottom portion 210, and an outer peripheral shape thereof has a substantially square shape. The first peripheral wall portion 211 forms a first accommodation chamber 215 (see FIG. 1). The substantially quadrangular control board 201 (see FIG. 1) is accommodated in the first accommodation chamber 215.

The second peripheral wall portion 212 extends rearward from the rear surface of the bottom portion 210 and has a substantially octagonal outer peripheral shape. The second peripheral wall portion 212 forms a second accommodation chamber 216 (see FIG. 1). Four coil assemblies 1 are accommodated in the second accommodation chamber 216. As shown in FIG. 1, the first accommodation chamber 215 and the second accommodation chamber 216 communicate with each other. That is, there is no partition wall between the first accommodation chamber 215 and the second accommodation chamber 216 in the configuration. Since the housing 200 has a configuration in which the partition wall is not present as described above, the coil assemblies 1 are disposed from the second accommodation chamber 216 to the first accommodation chamber 215 as shown in FIG. 1. Accordingly, the housing 200 can suitably accommodate the coil assemblies 1 while reducing a size in a front-rear direction.

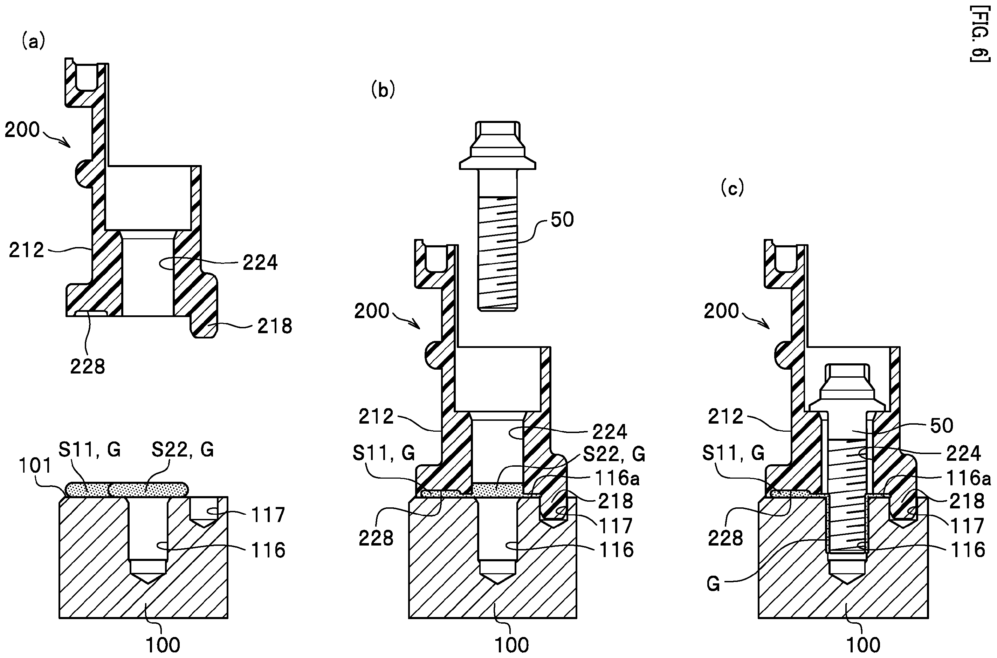

As shown in (a) of FIG. 6, a protrusion 218 to be engaged with a positioning hole 117 formed on the front surface 101 of the base body 100 is formed at a lower end portion of the second peripheral wall portion 212.

As shown in FIG. 2, an uneven holding wall 220 is formed on an inner surface of the second peripheral wall portion 212. The holding wall 220 includes boss portions 221 protruding inward in a left-right direction of the second accommodation chamber 216, a terminal boss portion 222 protruding upward and inward, and a holding portion 223 protruding downward and inward. Inside the holding wall 220, a total of four mounting spaces 225 in which the coil assemblies 1 can be mounted are formed between the adjacent boss portion 221 and terminal boss portion 222 and between the adjacent boss portion 221 and holding portion 223. An inner surface shape of the holding wall 220 in each mounting space 225 is the same, and is formed in a shape along an outer surface shape of the coil assembly 1.

A pair of groove portions 226 for positioning and fixing the coil assembly 1 in the mounting space 225 are recessed in an opening edge portion of each mounting space 225. In each mounting space 225, the groove portions 226 are formed in facing portions of the holding wall 220 that are disposed to face each other. Note, reinforcing ribs 227 are formed on the inner surface of the holding wall 220.

Screw insertion holes 224 are formed in the left and right boss portions 221, respectively. The screws 50 (see FIG. 5) for fixing the housing 200 to the base body 100 are inserted into the respective screw insertion holes 224. Each screw insertion hole 224 has a configuration in which a fixing bush is eliminated. That is, a material (resin material in the present embodiment) of the housing body 202 is exposed to an inner surface and an opening edge of the screw insertion hole 224.

As shown in FIGS. 2 and 4, a peripheral groove 228 is formed in a rear end portion of the second peripheral wall portion 212. The peripheral groove 228 functions as a housing adhesion margin S1 (see FIG. 4) for fixing the housing 200 with the adhesive G. In the housing adhesion margin S1, the adhesive G (see FIGS. 2 and 3) in the region indicated by the hatching line S11 (see FIGS. 2 and 3) is interposed on the front surface 101 of the base body 100. The housing 200 is adhered to the front surface 101 of the base body 100 via the adhesive G of the housing adhesion margin S1, and is hermetically sealed.

As shown in FIG. 1, a plurality of through holes 201a are formed in the control board 201. The press-fit terminals 10 provided in the coil assembly 1 are pressure-welded with the through holes 201a. The control board 201 is formed by attaching electronic components such as semiconductor chips to a substantially rectangular board body on which an electric circuit is printed. The control board 201 performs control based on information obtained from a sensor or the like (not shown) provided in the vehicle or a program stored in advance. Specifically, energization of the coil assembly 1 (see FIG. 2) and the motor M is controlled to control opening and closing operations of the solenoid valves V1, V2 and driving of the motor M. Other examples of the sensor include various sensors such as an angular velocity sensor and an acceleration sensor.

Note, when a control board 201A is assembled, other terminals, or the like (not shown) can be connected at the same time.

The lid body 203 seals an opening of the front surface of the housing 200 on a side opposite to the base body 100. The lid body 203 is fixed to a front end surface of the housing 200 by welding, adhesion, screw fastening, or the like.

As shown in FIG. 2, the coil assembly 1 includes a bobbin 2, a yoke 3, a coil 5, and the press-fit terminals 10 as connection terminals. As shown in FIG. 1, the coil assemblies 1 are electric components accommodated in the respective peripheral wall portions 202 in a state of surrounding the solenoid valves V1, V2. The coil assembly 1 is an electromagnetic coil that generates a magnetic field around each of the solenoid valves V1, V2 by energizing the coil 5 from the control board 201 via the press-fit terminal 10.

The ibs 25, 25 protruding laterally are provided at a rear end portion of the bobbin 2. The ribs 25, 25 function as a fitting portion (positioning portion) when the coil assembly 1 is assembled to the second accommodation chamber 216 of the housing 200. Specifically, as shown in FIG. 2, the ribs 25, 25 are press-fitted into the groove portions 226, 226 provided in the mounting space 225 of the second accommodation chamber 216. By this press-fitting, the coil assembly 1 is restricted from moving in a direction intersecting an assembly direction with respect to the housing 200 and from rotating around an axis parallel to the assembly direction.

On the other hand, the rib 25 also functions as an electric component adhesion margin S2 (see FIG. 4) for fixing the coil assembly 1 to the front surface 101 of the base body 100 with the adhesive G. Specifically, a lower surface 25a of the rib 25 is disposed flush with a rear surface of the holding wall 220 in a state where the rib 25 is press-fitted into the groove portion 226. Accordingly, the lower surface of the rib 25 faces the front surface 101 of the base body 100, and functions as the electric component adhesion margin S2.

The press-fit terminal 10 protrudes from the bobbin 2 located at an end portion of the yoke 3 opposite to the base body 100. End portions of a winding wire (not shown) of the coil 5 are electrically connected to the press-fit terminals 10, respectively. Tip end portions of the press-fit terminals 10 bulge in an annular shape, and are pressure-welded with the through holes 201a (see FIG. 1) of the control board 201 (see FIG. 1).

### (Method for Manufacturing Housing Assembly)

A method for manufacturing the housing assembly U includes an application step of applying the adhesive G to the front surface 101 of the base body 100 and a fixing step of fixing the housing 200 to the base body 100. Further, the application step includes an electric component application step for fixing the coil assembly 1 accommodated in the housing 200 to the front surface 101 of the base body 100. In the electric component application step, the adhesive G is applied to an abutting portion of the front surface 101 of the base body 100 against which the lower surface 25a of the rib 25 of the coil assembly 1 abuts. By applying the adhesive G to the lower surface 25a of the rib 25, the coil assembly 1 is directly fixed to the base body 100 with the adhesive G when the housing 200 is fixed to the base body 100.

In the application step, as shown in FIG. 3, the adhesive G is applied to all the regions indicated by the hatching lines S11, S21, S22, and S23 on the front surface 101 of the base body 100. That is, the adhesive G is applied to an abutting portion with the peripheral groove 228 of the second peripheral wall portion 212, an abutting portion with the lower surface 25a of the rib 25, an abutting portion with the peripheral edge portion of the bus bar terminal portion 230, and the screw holes 116, on the front surface 101 of the base body 100.

At the time of application, at the left edge portion of the front surface 101, application of the region indicated by the hatching line S22 is performed following application of one hatching line S21, and subsequently, application of the region indicated by the other hatching line S21 is performed, and finally, application of the region indicated by the hatching line S23 on an upper center side of the front surface 101 is performed. That is, at the left edge portion of the front surface 101, the application of the regions indicated by the hatching lines S21, S22, and S21 is sequentially performed in a single-stroke manner. As mentioned above, the continuous application of the adhesive G is similarly performed at the right edge portion of the front surface 101. Accordingly, efficient application is performed.

In the fixing step, a rear end portion of the housing 200 is made to abut against the front surface 101 of the base body 100, and the screws 50 are screwed into the screw holes 116 to fix the housing 200 to the base body 100. At the time of abutting, the housing 200 is brought close to the front surface 101 of the base body 100, and the rear end portion of the housing 200 is made to abut against the front surface 101 of the base body 100 while the respective coil assemblies 1 are externally fitted to the solenoid valves V1, V2 protruding from the front surface 101. Accordingly, the peripheral groove 228 of the housing 200, the respective coil assemblies 1, and the bus bar terminal portions 230 are adhered to the front surface 101 of the base body 100 with the adhesive G interposed between the base body 100 and the housing adhesion margin S1 and between the base body 100 and the electric component adhesion margins S2, S3.

Here, the adhesive G in the regions indicated by the hatching line S22 on the front surface 101 of the base body 100 is applied in a state of extending over an opening of the screw hole 116 as shown in (a) of FIG. 6. Accordingly, when the housing 200 abuts on, as shown in (b) of FIG. 6, the adhesive G straddles the screw insertion hole 224 of the second peripheral wall portion 212 of the housing 200 and the screw hole 116 of the base body 100, or the adhesive G enters the screw insertion hole 224.

Thereafter, when the screw 50 is inserted from the opening on a front surface side of the housing 200 through the screw insertion hole 224, as shown in (c) of FIG. 6, the screw portion of the screw 50 passes through the adhesive G on the screw insertion hole 224 or in the screw insertion hole 224, so that the adhesive G adheres to the screw portion. Accordingly, the screw 50 is tightened with the adhesive G interposed between the screw hole 116 and the screw 50.

Note, when the housing 200 abuts on, the adhesive G suitably spreads also to an opening edge portion 116a of the screw hole 116, and thus the adhesive G is interposed from the opening edge portion of the screw hole 116 to the inside of the screw hole 116. Therefore, strong fixation is realized.

The adhesive G is cured between the screw 50 and the screw hole 116 after the screw 50 is tightened, and exhibits a locking function.

According to the housing assembly U of the present embodiment described above, the housing 200 and the base body 100 can be hermetically sealed with the adhesive G having the sealing function, and the screw 50 can be adhesively fixed to the screw hole 116 using the adhesive G. Accordingly, it is possible to lock the screw 50 without requiring additional costs, additional steps, and special management.

Therefore, according to the housing assembly U of the present embodiment, adhesion and sealing performance of the housing 200 can be ensured, and the screw 50 can be prevented from falling off.

Further, since the adhesive G is cured in an elastic state, a sealing property between the housing 200 and the base body 100 is improved. In addition, when the housing 200 or the coil assembly 1 receives an input of an external force such as vibration, the adhesive G having elasticity also serves to reduce the input. In particular, in the bar handle vehicle such as a two-wheeled vehicle or a three-wheeled vehicle, since the housing assembly U strongly receives movement of the vehicle and vibration from a prime mover such as an engine, toughness against the vibration is improved.

In addition, since the coil assembly 1 accommodated in the housing 200 is fixed to the front surface 101 of the base body 100 with the adhesive G when the housing 200 is fixed to the base body 100, the coil assembly 1 can be easily fixed to the front surface 101 of the base body 100 without requiring additional costs, additional steps, and special management.

Further, according to the method for manufacturing the housing assembly U of the present embodiment, the housing 200 and the base body 100 can be hermetically sealed with the adhesive G having the sealing function, and the screw 50 can be adhesively fixed to the screw hole 116 using the adhesive G. Accordingly, it is possible to lock the screw 50 without requiring additional costs, additional steps, and special management.

### (Second Embodiment)

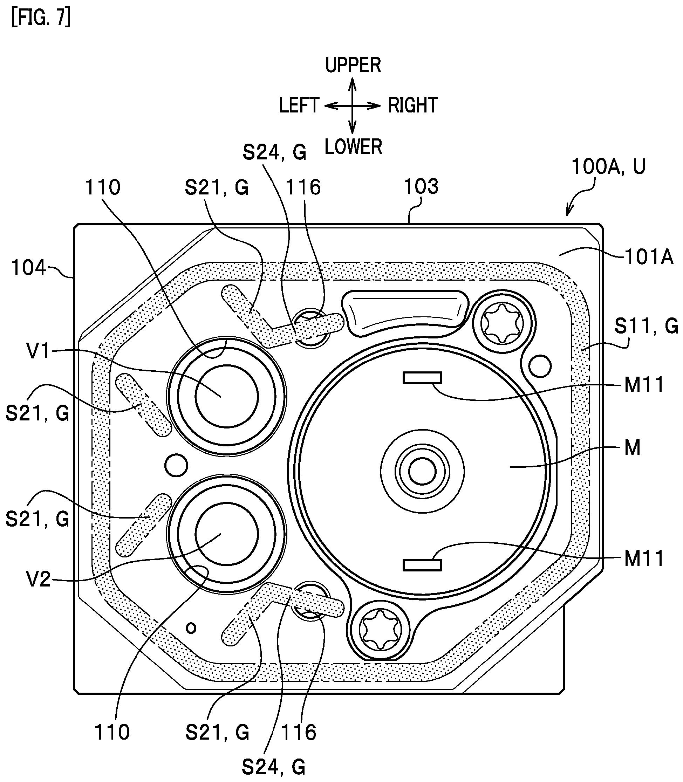

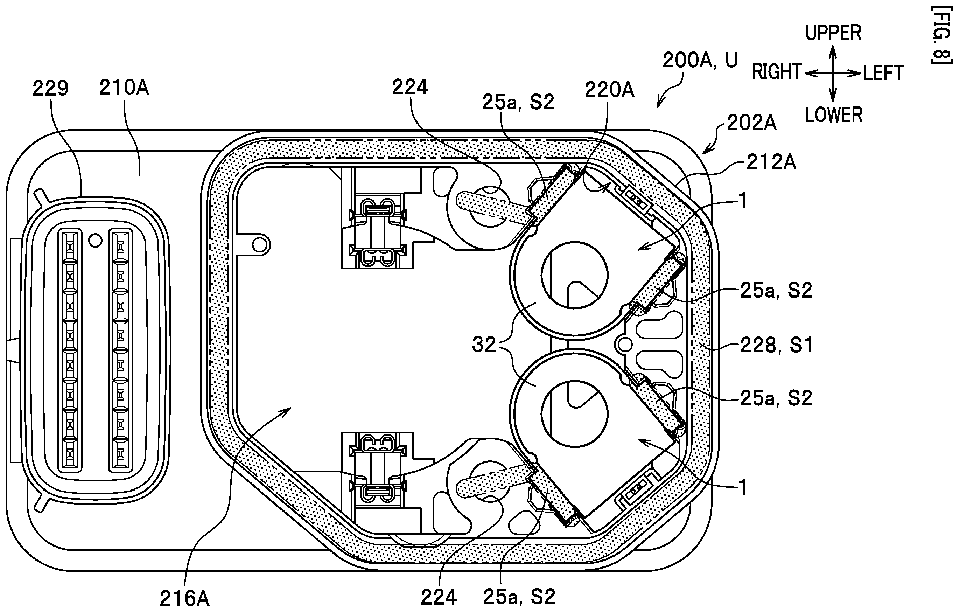

Next, a housing assembly and a method for manufacturing a housing assembly of a second embodiment will be described. FIG. 7 is a front view showing one surface of a base body provided in the housing assembly of the second embodiment of the invention, and FIG. 8 is a rear view showing a fixing surface of the housing, similarly. In the present embodiment, a case where the invention is applied to a housing assembly for a two-wheeled vehicle including one brake system will be described as an example. Of course, the invention may be applied to a housing assembly for a two-wheeled vehicle or a housing assembly for a four-wheeled vehicle, each including two brake systems. The same parts as those in the first embodiment are denoted by the same reference numerals, and detailed description thereof will be omitted.

As shown in FIG. 7, the housing assembly U of the present embodiment includes, for a base body 100A constituting the housing assembly U, the solenoid valves V1, V2 constituting one brake system and the motor M that drives a pump (not shown). On the other hand, in a housing 200A constituting the housing assembly U, as shown in FIG. 8, two coil assemblies 1 externally fitted to the solenoid valves V1, V2 (see FIG. 7) are accommodated in a second accommodation chamber 216A in a housing body 202A. Similarly to the first embodiment, each coil assembly 1 is electrically connected to the control board 201 (not shown) using the press-fit terminals 10.

### (Configuration of Base Body)

As shown in FIG. 7, the base body 100A is a metal component formed in a substantially rectangular parallelepiped shape. A brake fluid passage (oil passage) (not shown) is formed inside the base body 100A.

The bottomed attachment holes 110 to which the solenoid valves V1, V2 are mounted, a bottomed attachment hole (not shown) to which the motor M is mounted, and the like are formed on a front surface 101A, which is one of respective surfaces of the base body 100A. That is, the attachment holes of the solenoid valves V1, V2 and the motor M are collectively formed on the front surface 101A of the base body 100A. The coil assemblies 1 (see FIG. 8) as the electric components are externally fitted to the solenoid valves V1, V2, respectively. Motor bus bars M11 are provided at a bottom portion of a cover of the motor M.

The screw holes 116 for fixing the housing 200A (see FIG. 8) to the base body 100A are formed in the front surface 101A of the base body 100A similarly to the first embodiment. Also in the present embodiment, the screws 50 (not shown, the same applies hereinafter) are screwed into the screw holes 116 via the adhesive G.

The adhesive G is applied to the front surface 101A of the base body 100A. The adhesive G is applied to the region indicated by the annular hatching line S11 at the peripheral edge portion of the front surface 101A, the regions indicated by the linear hatching lines S21 on respective both side portions of each of the solenoid valves V1, V2, and the regions indicated by the linear hatching lines S24 intersecting the screw holes 116. On an upper edge portion side of the front surface 101, the hatching line S21 of an upper side portion of the solenoid valve V1 and the hatching line S24 are connected. Similarly, on a lower edge portion side of the front surface 101A, the hatching line S21 on a lower side portion of the solenoid valve V2 is connected to the hatching line S24. Each hatching line S24 extends to cross the center portion of each screw hole 116 in the diameter direction. That is, each hatching line S24 is applied so as to cover a part of each screw hole 116. Note, the hatching line S11 is located at a position corresponding to a peripheral groove 228A (see FIG. 8) of the housing 200A (see FIG. 8). Further, the hatching line S21 is located at a position corresponding to the lower surface 25a of the rib 25 of the coil assembly 1A.

### (Method for Manufacturing Housing Assembly)

The method for manufacturing the housing assembly U also includes the application step and the fixing step in the present embodiment. The application step includes the electric component application step.

In the application step, as shown in FIG. 7, the adhesive G is applied to all the regions indicated by the hatching lines S11, S21, and S24 on the front surface 101A of the base body 100. Further, at the time of application, at the upper edge portion and the lower edge portion of the front surface 101, the adhesive G is applied to the region indicated by the hatching line S24 continuously from the application of the adhesive G of one hatching line S21. Accordingly, the efficient application is performed.

In the fixing step, a rear end portion of the housing 200A abuts against the front surface 101A of the base body 100A, and the screws 50 are screwed into the screw holes 116 to fix the housing 200A to the base body 100A. Accordingly, the housing 200A and the respective coil assemblies 1 are adhered to the front surface 101A of the base body 100A with the adhesive G interposed between the base body 100A and the housing adhesion margin S1 and between the base body 100A and the electric component adhesion margin S2.

Also in the present embodiment, the adhesive G in the region indicated by the hatching line S24 is applied in a state of extending over the opening of the screw hole 116. Accordingly, when the housing 200 abuts on, the adhesive G straddles the screw insertion hole 224 of a second peripheral wall portion 212A of the housing 200 and the screw hole 116 of the base body 100A, or the adhesive G enters the screw insertion hole 224.

Then, when the screw 50 is inserted, a screw portion of the screw 50 passes through the adhesive G on the screw insertion hole 224 or in the screw insertion hole 224, so that the adhesive G adheres to the screw portion. Accordingly, the screw 50 is tightened with the adhesive G interposed between the screw hole 116 and the screw 50. Note, even in the present embodiment, when the housing 200 abuts on, the adhesive G suitably spreads also to an opening edge portion of the screw hole 116, and thus the adhesive G is interposed from the opening edge portion of the screw hole 116 to the inside of the screw hole 116. Accordingly, the strong fixation is realized.

Similarly to the first embodiment, the adhesive G is cured between the screw 50 and the screw hole 116 after the screw 50 is tightened, and exhibits the locking function.

According to the housing assembly U of the present embodiment described above, the same effects as those of the first embodiment can be obtained. That is, the housing 200A and the base body 100A can be hermetically sealed with the adhesive G having the sealing function, and the screw 50 can be adhesively fixed to the screw hole 116 using the adhesive G. Accordingly, it is possible to lock the screw 50 without requiring additional costs, additional steps, and special management.

Therefore, according to the housing assembly U of the present embodiment, adhesion and sealing performance of the housing 200A can be ensured, and the screw 50 can be prevented from falling off.

Although the invention has been described above based on the embodiments, the invention is not limited to the configurations described in the embodiments, and the configurations can be appropriately modified without departing from the gist thereof. Further, addition, deletion and replacement can be made for a part of the configurations of the embodiments.

For example, in the above embodiments, the electric component (coil assembly 1) is fixed to the base bodies 100, 100A with the adhesive G, but the electric component does not necessarily have to be fixed to the base bodies 100, 100A with the adhesive G. The electric component may be fixed with the adhesive G interposed between the housing body 202 (202A) and the base body 100 (100A) and between the screw 50 and the screw hole 116.

Further, although the adhesive G is applied so as to cross the center portion of the screw hole 116, the invention is not limited thereto. The adhesive G may be applied to a peripheral edge portion of the screw hole 116, a part of the opening of the screw hole 116, and the screw hole 116 as long as the adhesive G adheres to the screw portion when the screw 50 is screwed.

Further, as a shape of the rib 25 of the coil assembly 1 functioning as the electric component adhesion margin S2, various shapes can be adopted. Moreover, the number of the ribs 25 may be one, or three or more.

Further, although the press-fit terminal 10 is used as the connection terminal, a terminal that can be pressure-welded, such as another snap-fit terminal, can be adopted as the connection terminal. Moreover, the terminals may be connected by welding such as projection welding.

Further, although the configuration in which the coil assembly 1 as the electric component is fixed to the base bodies 100, 100A with the adhesive G is described, the invention is not limited thereto. The invention can be suitably applied to other electric components assembled to the housings 200, 200A.

Moreover, although the adhesive G is applied to the front surfaces 101, 101A of the base bodies 100, 100A, the adhesive G may be applied to the housings 200, 200A or the coil assemblies 1, 1A (electric component) side.

### Reference Signs List

1: coil assembly (electrical component)
5: coil
10: press-fit terminal (connection terminal)
50: screw
100: base body
101, 101A: front surface (one surface)
116: screw hole
200, 200A: housing
200a: accommodation portion
202, 202A: housing body
G: adhesive
U: housing assembly
V1, V2: solenoid valve

## Claims

1. A housing assembly in which a housing is fixed to one surface of a base body by a screw, wherein
the housing includes a housing body forming an accommodation portion,
the housing is fixed with an adhesive having a sealing function interposed at an abutting portion between the housing body and the base body,
a screw hole into which the screw is screwed is formed on the one surface of the base body, and
the adhesive is interposed between the screw and the screw hole.

2. The housing assembly according to claim 1, wherein
the adhesive is cured into an elastic body.

3. The housing assembly according to claim 1 or 2, wherein
an electric component is accommodated in the accommodation portion, and
the electric component is fixed to the base body with the adhesive.

4. The housing assembly according to claim 3, wherein
the electric component is a coil assembly configured to drive a solenoid valve,
the coil assembly includes:
a coil, and
a connection terminal connected to the coil and provided on a side opposite to the base body,
the connection terminal is connected in the housing, and
the coil assembly is fixed to the base body with the adhesive when the housing is fixed to the base body.

5. A method for manufacturing a housing assembly in which a housing including a housing body that abuts against one surface of a base body is fixed to the one surface with a screw, the one surface being provided with a screw hole into which the screw is screwed, the method comprising:
an application step of applying an adhesive having a sealing function to an abutting portion of the one surface with the housing body, and the screw hole; and
a fixing step of making the housing body abut against the adhesive applied to the abutting portion and screwing the screw into the screw hole to fix the housing.

6. The method for manufacturing a housing assembly according to claim 5, wherein
the application step includes an electric component application step of fixing an electric component accommodated in the housing to the one surface, and
the electric component application step includes applying an adhesive to an abutting portion where the electric component abuts against the one surface.
